# EUROPÄISCHE PATENTSCHRIFT

(11) **EP 3 793 416 B1**
(45) Veröffentlichungstag und Bekanntmachung des Hinweises auf die Patenterteilung: **31.05.2023**
(21) Anmeldenummer: 19720068.6
(22) Anmeldetag: 12.04.2019
(51) Int. Cl.: A47J 43/044, A47J 43/08, A47J 43/07, A47J 36/06

(54) **HAUSHALTSGERÄT ZUM VERARBEITEN VON LEBENSMITTELN UND SPRITZSCHUTZ DAFÜR**
DOMESTIC APPLIANCE FOR PROCESSING FOODS AND SPLASH GUARD THEREFOR
APPAREIL MÉNAGER POUR LA TRANSFORMATION D'ALIMENTS ET PROTECTION CONTRE LES PROJECTIONS POUR CELUI-CI

(30) Priorität: 15.05.2018 DE 102018207506
(43) Veröffentlichungstag der Anmeldung: 24.03.2021
(73) Patentinhaber: De'Longhi Braun Household GmbH, 63263 Neu-Isenburg (DE)
(72) Erfinder: EISSENGARTHEN, Christoph, 55299 Nackenheim (DE); KLEEMANN, Christof, 61350 Bad Homburg (DE); DEXHEIMER, Christian, 63225 Langen (DE); LEBSACK, Daniel, 97990 Laudenbach (DE); KLEINMAGD, Thea, 60322 Frankfurt am Main (DE)
(74) Vertreter: Hoffmann Eitle
(86) Internationale Anmeldenummer: PCT/EP2019/059457
(87) Internationale Veröffentlichungsnummer: WO 2019/219310

(56) Entgegenhaltungen:
- EP-A1- 3 075 295
- EP-A1- 3 311 717
- CN-A- 101 138 466
- DE-A1-102011 004 483
- DE-U1-202012 103 202
- DE-U1-202013 100 303
- GB-A- 2 327 864
- US-A- 5 360 170
- US-A1- 2016 287 011

## Beschreibung

### Technisches Gebiet

Die vorliegende Erfindung betrifft ein Haushaltsgerät zum Verarbeiten von Lebensmitteln.

### Technischer Hintergrund

Handgehaltene Haushaltsgeräte werden weit verbreitet in privat genutzten und professionell betriebenen Küchen verwendet. Hierbei sind insbesondere handgehaltene Stabmixer und handgehaltene Mixer besonders beliebt. Diese Geräte werden typischerweise mit verschiedenen, lösbaren Werkzeugen und Zubehörgeräten für verschiedene Anwendungszwecke verkauft, wodurch diese sehr flexibel anwendbar sind.

Diese Zubehörgeräte umfassen unter anderem Aufsätze zur Verarbeitung oder zum Zerkleinern von Lebensmitteln, häufig auch als Chopper oder Food Processor bezeichnet. Diese bestehen aus einer Schüssel, verschiedenen Verarbeitungswerkzeugen, die in der Schüssel angeordnet werden können, und einem Deckel mit einem Getriebe, welches die Drehzahl verringert. Der Deckel ist dazu ausgestaltet, das Verarbeitungswerkzeug auf der Unterseite des Deckels mit dem Getriebe zu koppeln und eine Motoreinheit an der Oberseite des Deckels mit dem Getriebe zu koppeln. Die Motoreinheit beinhaltet einen Elektromotor im Inneren. Das Getriebe verringert die Drehgeschwindigkeit des Motors auf ein Niveau, welches für das Werkzeug geeignet ist. Der Deckel weist oft ein Zuführrohr auf, um das Hinzufügen von weiteren Nahrungsmitteln zu ermöglichen, während das Gerät betrieben wird.

Bei den meisten dieser Zubehörgeräte, die auf dem Markt erhältlich sind, weist der Deckel ein nicht lösbar eingebautes Getriebe auf. Ein Beispiel einer solchen Anordnung ist in der CN 101 138 466 A offenbart. In dieser Ausgestaltung können die Deckel nicht in einem Geschirrspüler gereinigt werden, da ansonsten Wasser in den Deckel und das darin befindliche Getriebe eindringen würde und dieses beschädigen oder langfristig sogar zerstören würde.

Dies ist jedoch dahingehend ein Problem, dass die Unterseite des Deckels und auch die Innenseite des Zuführrohrs bei Verwendung in Kontakt mit den zu verarbeitenden Lebensmitteln sind und daher nach jeder Benutzung zu reinigen sind. Das Getriebe ist jedoch typischerweise zwischen einem oberen Teil und einem unteren Teil des Deckels nicht lösbar vorgesehen, wobei sich eine Krafteingabewelle, mit der eine externe Motoreinheit gekoppelt wird, durch den oberen Teil erstreckt, und sich die Ausgabekupplung, mit der das Verarbeitungswerkzeug gekoppelt wird, durch den unteren Teil erstreckt. Wenn ein Deckel mit dieser Gestaltung in der Spülmaschine platziert wird, führen die Druckunterschiede aufgrund des Erwärmens und Abkühlens in der Spülmaschine dazu, dass Wasser in das Innere des Deckels und somit auch in das Getriebe eindringt und dieses mit der Zeit zerstört.

Es ist jedoch mit vertretbarem Kostenaufwand nicht möglich, das Getriebe und den Deckel so abzudichten, dass diese den Betriebszuständen in einer Spülmaschine widerstehen können. Aus diesem Grund wird es von den Herstellern von Geräten wie zum Beispiel dem Gerät aus der CN 101 138 466 A in der Regel explizit verboten, den Deckel in einer Spülmaschine zu reinigen. Bei einigen Geräten ist es zusätzlich verboten, den Deckel unter fließendem Wasser zu reinigen, sondern nur ein feuchtes Tuch ist zur Reinigung zulässig. Andernfalls würde sich nach und nach Wasser in dem Deckel ansammeln, was das Getriebe zerstören würde. Demgemäß muss der Deckel von Hand gereinigt werden. Dies ist jedoch wenig benutzerfreundlich, da der Deckel in direkten Kontakt mit den verarbeiteten Lebensmitteln gerät und daher oft stark verschmutzt ist.

Zudem ist der Bereich im Inneren des Zuführrohres nur schlecht zu erreichen.

Im Hinblick auf diese Problematik sind die Lösungen, die in der WO 2013/181692 A1 und WO 2013/097702 A1 beschrieben werden, von Vorteil. In diesen Ausgestaltungen besteht der Deckel nur aus einem einzigen Teil, welches ein Zuführrohr zum Hinzufügen von Nahrungsmitteln aufweist. Das Getriebe wird oben auf dem Deckel angeordnet und kann leicht durch einen Benutzer entfernt werden. Demgemäß kann dieses nach Verwendung entfernt werden und der Deckel kann - ohne das Getriebe - in einer Spülmaschine angeordnet werden. Dies führt zu einer erheblichen Verbesserung der Situation, da man diejenigen Teile, die bei Gebrauch in erheblichem Maße mit Lebensmitteln in Kontakt kommen (nämlich die Unterseite des Deckels und das Zuführrohr), in einer Spülmaschine reinigen kann, ohne dass es zu Beschädigungen eines Getriebes kommt. Die WO 2013/181692 zeigt zusätzlich eine Zwischenkupplung, welche verhindert, dass die Ausgabe des Getriebes im direkten Kontakt mit dem Werkzeug ist. Somit wird eine noch bessere Trennung der Lebensmittel vom Getriebe erzielt.

Obwohl diese Ausgestaltung die oben genannten Nachteile zumindest lindert, führt diese auch, wie die vorliegenden Erfinder bemerkt haben, zu neuen Nachteilen: Um das Getriebe in dem Deckel anzuordnen, hat der Deckel eine tiefe Ausnehmung in dessen oberer Seite. Dies führt zu tiefen Hohlräumen mit scharfen Ecken und engen Nischen in dessen unterer Seite, wie dies aus der Fig. 9 der US 9,572,457 entnommen werden kann. Diese Ecken und Nischen sind jedoch, wie die Erfinder festgestellt haben, nicht optimal in einer Spülmaschine reinigbar, da sie nur schwer von gespritztem Wasser erreichbar sind. Außerdem tendieren diese dazu, dass sich hier Lebensmittelreste ansammeln, wie von den Erfindern festgestellt wurde, welche je nach Lebensmittel (z.B. Hefeteig) dort auch festkleben können und somit zusätzlich schlecht zu entfernen sind. Insofern müssen entsprechende Komponenten gründlicher als einfacher konstruierte Komponenten gereinigt werden, können jedoch nur mit schlechten Ergebnissen in einer Spülmaschine gereinigt werden.

Zudem besitzt oder verwendet nicht jeder Benutzer eine Spülmaschine. Die gezeigte Ausführungsform ist aufgrund der zerklüfteten Geometrie manuell noch schlechter reinigbar, als die oben beschriebene Ausführungsform mit fest verbautem Getriebe.

Weiterer Stand der Technik wird in der US 2004/0213085 A1 offenbart. Produkte aus dem Stand der Technik, die auf dem Markt waren, umfassen den Breville BSB530XL, der unter der Bezeichnung "All In One" vertrieben wurde. Ebenso ist der Braun MQ70-Mixer ein Beispiel für den Stand der Technik. Die EP 3 311 717 A1 offenbart Merkmale, die unter den Oberbegriff von Anspruch 1 fallen.

Die US 2016/287011 A1 und GB 2 327 864 A bilden weiteren Stand der Technik.

### Darstellung der Erfindung

Den Erfindern sind die oben genannten Nachteile im Stand der Technik aufgefallen, und es ist ein Ziel der vorliegenden Erfindung, diese Nachteile zu lindern oder sogar zu beseitigen. Insbesondere zielt die Erfindung darauf ab, ein Haushaltsgerät zum Verarbeiten von Lebensmitteln bereitzustellen, dessen Komponenten, die in Kontakt mit Lebensmitteln geraten, in einer Spülmaschine reinigbar sind, jedoch auch einfach von Hand gereinigt werden können.

Die Erfindung wird durch Anspruch 1 definiert. Bevorzugte Ausführungsformen sind in den abhängigen Ansprüchen definiert.

Gemäß Anspruch 1 handelt es sich bei der Erfindung um ein Haushaltsgerät zum Verarbeiten von Lebensmitteln. Bei einem solchen Haushaltsgerät kann es sich zum Beispiel um eine Küchenmaschine oder ein Zubehörgerät für einen Handmixer oder Stabmixer handeln.

Dieses Haushaltsgerät weist eine Schüssel auf, in welche die zu verarbeitenden Lebensmittel durch eine Öffnung eingeführt werden können. Die Lebensmittel werden in dieser Schüssel verarbeitet.

In diese Schüssel ist ein Werkzeug zum Verarbeiten von Lebensmitteln einsetzbar. Bei einem solchen Werkzeug kann es sich zum Beispiel um an einer Welle befestigte Klingen handeln, die bei Rotation die Lebensmittel, die in der Schüssel sind, zerkleinern. Es können jedoch auch andere Werkzeuge verwendet werden wie zum Beispiel Werkzeuge, die zum Mischen oder Kneten von bereits zerkleinerten Lebensmitteln gedacht sind.

Das Haushaltsgerät weist ferner einen Spritzschutz auf. Bei diesem Spritzschutz handelt es sich um eine Abdeckung, die in die Öffnung der Schüssel eingesetzt werden kann, um somit das Herausspritzen von Lebensmitteln, die in der Schüssel verarbeitet werden, zu verhindern oder zumindest zu erschweren. Hierbei muss der Spritzschutz nicht als durchgängige Platte ausgebildet sein. Der Spritzschutz kann durchaus Durchlässe aufweisen, die zum Beispiel dazu gedacht sind, Lebensmittel in die Schüssel einzuführen, während das Haushaltsgerät betrieben wird. Des Weiteren kann der Spritzschutz auch ein Zwischenkupplungselement aufweisen, das sich durch den Spritzschutz hindurch erstreckt, um eine Kraftübertragung von außerhalb des Spritzschutzes zu dem Werkzeug zu ermöglichen, das sich in der Schüssel befindet. Der Spritzschutz ist so ausgestaltet, dass Angrenzungsbereiche des Spritzschutzes der Innenwand der Öffnung gegenüberliegen, um das Herausspritzen von Lebensmitteln aus der Schüssel zu verhindern. Anders gesagt ist der Spritzschutz so dimensioniert, dass er mit der Innenwand der Öffnung der Schüssel nur einen geringen Spalt aufweist, der nur in geringem Maße oder gar nicht die zu verarbeitenden Lebensmittel durchdringen lässt. Hierdurch wird verhindert, dass eine oberhalb des Spritzschutzes angeordnete Komponente des Haushaltsgeräts mit den verarbeiteten Lebensmitteln in Kontakt gerät. Zusätzlich oder alternativ kann am Außendurchmesser des Spritzschutzes ein Dichtelement angebracht sein, das die Abdichtung zusätzlich verbessert.

Weiterhin weist das erfindungsgemäße Haushaltsgerät einen Deckel auf, der in die Öffnung der Schüssel einsetzbar ist, nachdem der Spritzschutz in die Öffnung der Schüssel eingesetzt wurde (wobei es auch möglich wäre, diesen in die Öffnung einzusetzen, ohne vorher den Spritzschutz einzuführen, was aber u.U. zu einem nicht funktionsfähigen Haushaltsgerät führen würde). Insofern ist bei Verwendung der Deckel so angeordnet, dass der Spritzschutz zwischen demjenigen Raum der Schüssel, in dem die Lebensmittel zu verarbeiten sind, und dem Deckel liegt. Der Spritzschutz verhindert somit (oder erschwert zumindest), dass Lebensmittel, die von dem Haushaltsgerät verarbeitet werden, zu dem Deckel gelangen und diesen verschmutzen. Dadurch wird der Deckel, der zum Beispiel auch ein Getriebe aufweisen kann, sauber gehalten, während die verarbeiteten Lebensmittel, die ansonsten auf den Deckel auftreffen würden, nun auf den Spritzschutz auftreffen und nur diesen verschmutzen. Es ist daher nicht nötig, nach Verwendung des Haushaltsgeräts den Deckel aufwendig zu reinigen, sondern es reicht aus, lediglich den Spritzschutz zu reinigen.

Erfindungsgemäß weist der Spritzschutz eine Platte auf, die sich im Wesentlichen flach erstreckt und mit den Angrenzungsbereichen endet. Bei den Angrenzungsbereichen handelt es sich um diejenigen Bereiche, die der Innenwand der Öffnung gegenüberliegen. Unter dem Merkmal, dass sich die Platte des Spritzschutzes im Wesentlichen flach erstreckt, wird verstanden, dass der Spritzschutz keine Ausnehmungen zum Aufnehmen von Komponenten wie zum Beispiel einen Deckel oder Getriebe aufweist. Ganz im Gegensatz ist er an seiner Oberseite (d. h. derjenigen Seite, die bei Verwendung dem Deckel gegenüberlieget) flach und ohne wesentliche Vertiefungen. Insbesondere gibt es auch an den Umfangsabschnitten, zu denen auch die Angrenzungsbereiche zählen, keine Wülste oder ähnliche Verdickungen, wie dies im Stand der Technik der Fall ist. Noch anders formuliert ist die Platte des Spritzschutzes derart ausgestaltet, dass sich die Oberseite des Spritzschutzes, wenn man von dem Mittelpunkt des Spritzschutzes aus radial nach außen geht, nicht wesentlich senkrecht zur Radialrichtung erstreckt. Insbesondere bedeutet auch das Merkmal, dass die Platte mit den Angrenzungsbereichen endet, dass es zwischen dem flachen Bereich des Spritzschutzes und den Abschnitten, welche der Innenseite der Öffnung gegenüberliegen, keine sich axial erstreckenden Bereiche gibt.

Dadurch, dass der Spritzschutz eine Platte aufweist, die sich im Wesentlichen flach erstreckt und mit den Angrenzungsbereichen endet, kann dieser Spritzschutz leicht gereinigt werden, auch in einer Spülmaschine. Es gibt keine Nischen oder nur wenige Nischen mit geringer Tiefe und saften Übergängen, in denen sich Lebensmittel ansammeln könnten, was durch das Merkmal erfasst wird, dass die Platte des Spritzschutzes im Wesentlichen flach ist und dieser flache Bereich mit den Angrenzungsbereichen endet. Im Gegensatz dazu gibt es zum Beispiel in der entsprechenden Komponente 17, die in der Fig. 6 der WO 2013/097702 A1 gezeigt ist, solche Nischen, in denen sich Lebensmittel ansammeln könnten, welche schwer zu reinigen sind. Der Deckel sitzt somit erfindungsgemäß auf dem Spritzschutz auf, ohne in den Spritzschutz einzudringen.

Da es, wie oben erwähnt, bei dem erfindungsgemäßen Haushaltsgerät keine Nischen gibt, in denen sich Lebensmittel ansammeln könnten und die auch schlecht zu reinigen wären, ist ein entsprechendes Haushaltsgerät benutzerfreundlicher: Der Spritzschutz kann in einer Spülmaschine gereinigt werden, da er keine empfindlichen Komponenten enthält (wie z.B. ein Getriebe) und da alle Teile leicht von dem in einer Spülmaschine eingesetzten Wasser erreicht und gereinigt werden können. Der Deckel jedoch, der oft nicht in einer Spülmaschine gereinigt werden kann, da er z.B. ein Getriebe enthält, wird von dem Spritschutz vor Verschmutzungen geschützt und bedarf daher keiner aufwändigen Reinigung. Insofern ist ein entsprechendes Haushaltsgerät anwenderfreundlich und hygienisch.

Bevorzugt weist der Spritzschutz ein Zuführrohr für Lebensmittel auf, durch welches Lebensmittel in die Schüssel eingeführt werden können. Durch ein entsprechendes Zuführrohr wird sichergestellt, dass man auch bei Betrieb des Haushaltsgeräts Lebensmittel in die Schüssel einbringen und dort verarbeiten kann, ohne dass die Gefahr besteht, mit den Werkzeugen in Berührung zu kommen. Bevorzugt hat der Deckel eine Öffnung, durch die sich das Zuführrohr erstreckt, wenn der Deckel auf dem Haushaltsgerät angeordnet ist.

Weiterhin wird bevorzugt, dass der Deckel eine Motorkupplung aufweist, mit der eine externe Motoreinheit koppelbar ist. Eine entsprechende Motorkupplung dient dazu, das Haushaltsgerät mit einer separat von dem Haushaltsgerät vorgesehenen Motoreinheit betreiben zu können. Weiterhin weist der Deckel eine Transmissionskupplung auf, die mit der Motorkupplung gekoppelt ist und die dazu ausgestaltet ist, ein Drehmoment, das durch den externen Motor erzeugt wird und auf die Motorkupplung ausgeübt wird, auszugeben. Bevorzugt erfolgt diese Kopplung zwischen der Motorkupplung und der Transmissionskupplung über ein Getriebe. Durch eine solche Ausgestaltung dient der Deckel dazu, eine Kraftübertragung von extern zu einem Werkzeug, welches sich in der Schüssel befindet, zu ermöglichen. Ein entsprechendes Haushaltsgerät ist, da es von extern antreibbar ist, benutzerfreundlich und kostengünstig, da die externe Motoreinheit auch in Kombination mit anderen Zubehörteilen verwendet werden kann. Bei dem Getriebe handelt es sich bevorzugt um einen Drehzahlverminderer, um sicherzustellen, dass die Geschwindigkeit, mit der das Werkzeug in der Schüssel angetrieben wird, hinreichend kleiner als die eingegebene Drehzahl ist.

Bevorzugt weist die Transmissionskupplung ein koaxial angeordnetes inneres und äußeres erstes Kopplungselement, um beide von der Transmissionskupplung bereitzustellende Drehgeschwindigkeiten gleichzeitig übertragen zu können. Das innere und äußere erste Kopplungselement lassen sich mit verschiedenen Drehzahlen drehen und sind als zwei voneinander verschiedene Komponenten ausgebildet.

In diesem Zusammenhang wird ferner bevorzugt, dass der Spritzschutz ein Zwischenkopplungselement aufweist, das mit der Transmissionskupplung und dem Werkzeug koppelbar ist, sodass ein Drehmoment, das durch die Transmissionskupplung ausgegeben wird, zu dem Werkzeug übertragen wird. Das Zwischenkopplungselement ist zwischen dem Deckel und dem Werkzeug vorgesehen.

Dadurch, dass ein entsprechendes Zwischenkopplungselement vorgesehen ist, benötigt man keine unverschlossene Öffnung in dem Spritzschutz, um auf das Werkzeug ein Drehmoment auszuüben. Insofern dient auch dieses Merkmal dazu, Verschmutzungen des Deckels zu vermeiden. Hierbei ist das Werkzeug bevorzugt so ausgestaltet, dass es nicht alleine über den Deckel angetrieben werden kann, solange nicht der Spritzschutz montiert ist. Dies verhindert, dass das Werkzeug direkt vom Deckel aus angetrieben wird. Dies wäre nach den anwendbaren Sicherheitsnormen (z.B. IEC 60335) nicht zulässig, da bei fehlendem Spritzschutz auch kein Zuführrohr vorhanden ist und somit kein ausreichender Berührungsschutz vorhanden ist. Ein entsprechendes Merkmal kann durch eine (kurze) Länge des Werkzeugs oder eine entsprechende Ausgestaltung von dessen Kupplung erzielt werden.

Es wird bevorzugt, dass das Zwischenkopplungselement aus zwei koaxial angeordneten Elementen besteht, einem inneren und einem äußeren zweiten Kopplungselement, die dazu ausgestaltet sind, dass sie gleichzeitig mit verschiedenen Drehgeschwindigkeiten angetrieben werden. Anders gesagt können sie unabhängig voneinander gedreht werden. Hierdurch kann man durch selektives Koppeln des Werkzeugs mit dem inneren oder dem äußeren ersten Kopplungselement ein Werkzeug je nach Bedarf schneller oder langsamer antreiben.

Hierbei wird bevorzugt, dass das innere und/oder das äußere zweite Kopplungselement einteilig sind. Ein solches zweites Kopplungselement ist leichter herstellbar und weniger empfindlich, was zu einer erhöhten Lebensdauer führt.

Weiterhin wird bevorzugt, dass das innere und das äußere zweite Kopplungselement an denjenigen Seiten, die dem Deckel zugewandt sind und/oder dem Deckel abgewandt sind, eine zwischen den beiden Seiten unterschiedliche Geometrie zur Drehmomentübertragung aufweist. Da das Werkzeug so ausgestaltet ist, dass es nur mit der Ausgabeseite des (jeweils zugehörigen) zweiten Kopplungselements gekoppelt werden kann, kann es nunmehr nicht direkt mit einem der ersten Kopplungselemente gekoppelt werden. Hierdurch wird verhindert, dass das Werkzeug direkt mit dem Deckel verbunden wird, wenn kein Spritzschutz montier ist, was wiederum, wie weiter oben dargelegt wurde, die Sicherheit erhöht.

Weiterhin wird bevorzugt, dass es möglich ist, die Kombination aus Spritzschutz und Deckel als eine Einheit von der Schüssel zu entfernen. Dies erhöht die Benutzerfreundlichkeit z.B. beim Ausleeren der Schüssel.

Es wird weiterhin bevorzugt, dass das Haushaltsgerät eine Einrichtung aufweist, die zwischen dem Deckel und dem Spritzschutz eine Vorspannkraft erzeugt, welche so gerichtet ist, dass sie den Deckel und den Spritzschutz voneinander wegdrückt. Dieses Merkmal führt zu einer erhöhten Sicherheit des Haushaltsgeräts. Durch eine solche Vorspannung wird die Wahrscheinlichkeit erhöht, dass ein Benutzer das Haushaltsgerät nicht unbeabsichtigt in Betrieb nehmen kann. Wenn ein Zwischenkopplungselement vorhanden ist, wird dieses von der Transmissionskupplung getrennt, sofern die Vorspannkraft nicht durch eine entsprechende Gegenkraft ausgeglichen wird, was dazu führt, dass auf das Werkzeug nur dann ein Drehmoment ausgeübt werden kann, wenn sowohl der Spritzschutz, der Deckel also auch das Werkzeug wie vorgesehen montiert sind und eine entsprechende Gegenkraft erzeugt wird. Diese Gegenkraft wird im montierten Zustand durch ein Abstützen des Spritzschutzes in der Schüssel und durch ein Einrasten des Deckels in der Schüssel erzeugt. Dies verhindert, dass ein Benutzer unbeabsichtigt das Werkzeug betreiben kann, wenn die Schüssel nicht korrekt mit Deckel und Spritzschutz montiert ist, da dann ein Berühren des Werkzeugs im Betrieb möglich wäre. Gewöhnlich wird ein solches Berühren durch den Spritzschutz und den Deckel vermieden. Insofern wird durch dieses Merkmal die Sicherheit des Haushaltsgeräts erhöht.

Weiterhin wird bevorzugt, dass die Einrichtung einen oder mehrere Stifte aufweist, die an dem Spritzschutz vorgesehen sind, und sie auch vorgespannte Auswurfelemente aufweist, die in dem Deckel vorgesehen sind und eine Drückkraft auf den/die Stift/e ausüben können. Eine solche Ausgestaltung der Einrichtung ist leicht implementierbar und führt somit zu einem kostengünstigen, aber auch sicheren Haushaltsgerät.

Weiterhin wird bevorzugt, dass das Haushaltsgerät eine Befestigungseinrichtung zum lösbaren Befestigen des Deckels an der Schüssel aufweist. Durch das Vorsehen einer entsprechenden Befestigungseinrichtung werden die Sicherheit des Haushaltsgeräts und auch die Benutzerfreundlichkeit erhöht, da vermieden werden kann, dass sich der Deckel ungewollt von der Schüssel löst. Diese Befestigungseinrichtung weißt bevorzugt eine Rasteinrichtung im Deckel auf, die dazu ausgestaltet ist, an einem entsprechenden Vorsprung bzw. einer entsprechenden Ausnehmung der Schüssel einzurasten. Eine solche Rasteinrichtung ist leicht für einen Benutzer zu bedienen und führt somit zu einer erhöhten Benutzerfreundlichkeit.

Das Haushaltsgerät weißt bevorzugt eine Nabe auf, die sich in der Schüssel an demjenigen Ende, das der Öffnung gegenüberliegt, befindet und über die das Werkzeug drehbar gelagert werden kann. Eine solche Nabe führt zu einer guten und stabilen Führung eines sich drehenden Werkzeugs in der Schüssel.

Es wird bevorzugt, dass die Platte des Spritzschutzes ein gewelltes Profil aufweist. Eine entsprechende Ausgestaltung der Platte des Spritzschutzes führt zu einer erhöhten Steifigkeit des Spritzschutzes und ist leicht reinigbar.

Alternativ kann die Platte auch ohne Wellenprofil ausgeführt werden und zur Erhöhung der Steifigkeit Rippen auf der Unterseite angebracht werden. Diese Ausführungsform ist allerdings schlechter zu reinigen.

Es wird auch bevorzugt, dass die Platte des Spritzschutzes Verstärkungsrippen aufweist. Auch dieses Merkmal erhöht die Lebensdauer des Spritzschutzes.

Weiterhin wird bevorzugt, dass der Spritzschutz eine Bajonettkopplung an dem Umfang von dessen Unterseite aufweist, um mit bestimmten Werkzeugen gekoppelt zu werden. Eine entsprechende Ausgestaltung des Haushaltsgeräts führt dazu, dass man dieses gut mit verschiedensten Werkzeugen verwenden kann.

Weiterhin wird bevorzugt, dass das Haushaltsgerät auch ein Werkzeug zum Verarbeiten von Lebensmitteln aufweist. Dieses Werkzeug ist typischerweise in die Schüssel eingesetzt. Ein solches Haushaltsgerät hat die Vorteile, die weiter oben erwähnt wurden.

### Kurze Beschreibung der Figuren

Fig. 1a) und 1b) zeigt ein zusammengebautes Haushaltsgerät gemäß der Erfindung, wobei Fig. 1b) dieses ohne die Motoreinheit 10` zeigt.
Fig. 2 zeigt die einzelnen Komponenten des Haushaltsgeräts der Fig. 1b).
Fig. 3 zeigt die Unterseite des Deckels perspektivisch.
Fig. 4a) und b) zeigen eine Draufsicht und eine Untersicht des Spritzschutzes.
Fig. 5 zeigt ein Werkzeug, das in dem Haushaltsgerät der Fig. 1 verwendet werden kann.
Fig. 6 zeigt eine Schnittansicht durch das Haushaltsgerät der Fig. 1b) .
Fig. 7 zeigt den Spritzschutz und den Deckel des Haushaltsgeräts im zusammengebauten und zusammengeschobenen Zustand.
Fig. 8 zeigt den Spritzschutz und den Deckel des Haushaltsgeräts in einem Zustand, in dem diese vormontiert, jedoch durch die Federkraft der Auswurfelemente auseinandergedrückt sind, z.B. wenn diese nicht in die Schüssel eingesetzt sind.

### Detaillierte Beschreibung der Figuren

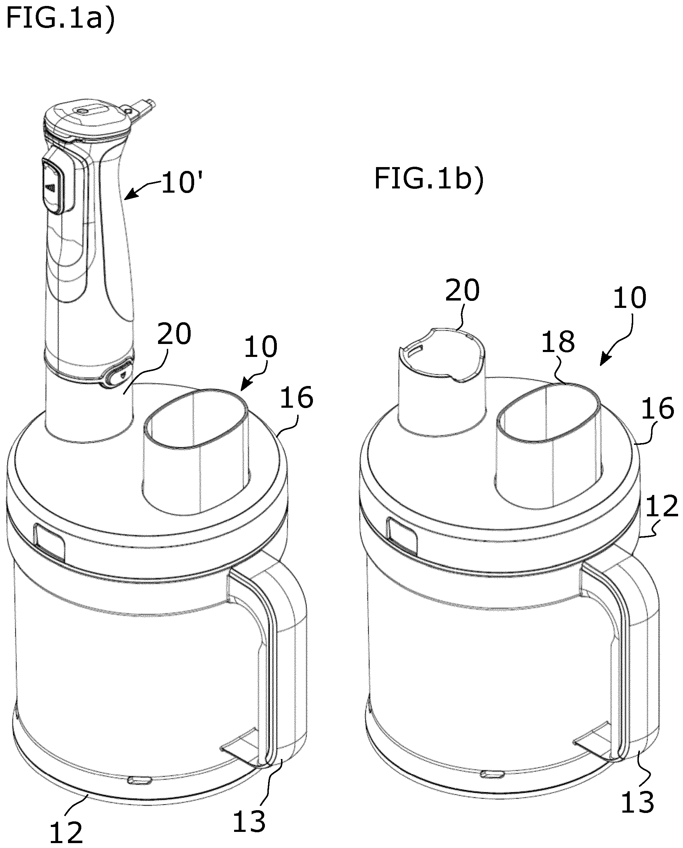

Fig. 1 zeigt eine Ansicht eines zusammengebauten Haushaltsgeräts 10 zum Verarbeiten von Lebensmitteln gemäß der Erfindung. Hierbei zeigt Fig. 1a) ein Haushaltsgerät 10, bei dem eine separate Motoreinheit 10` eingesetzt wurde. Fig. 1b) zeigt das Haushaltsgerät 10 ohne diese Motoreinheit 10`.

Wie in den Fig. 1a) und 1b) zu sehen ist, weist das Haushaltsgerät 10 eine Schüssel 12 auf, an deren Außenseite ein Griff 13 vorgesehen ist. In eine Öffnung der Schüssel 12 ist ein Spritzschutz 14 (nicht in Fig. 1 dargestellt) eingesetzt. Von diesem Spritzschutz 14 ragt ein Zuführrohr 18 nach oben hervor und ermöglicht das Einführen von Lebensmitteln in die Schüssel 12 während des Betriebs. Auf diesen Spritzschutz 14 ist ein Deckel 16 aufgesetzt. Dieser Deckel 16 weist eine Öffnung 28 auf, durch die sich das Zuführrohr 18 erstreckt und welche dieses Zuführrohr 18 umschließt. Ferner weist der Deckel 16 einen Aufsatz 20 auf, in den die Motoreinheit 10` eingesetzt werden kann.

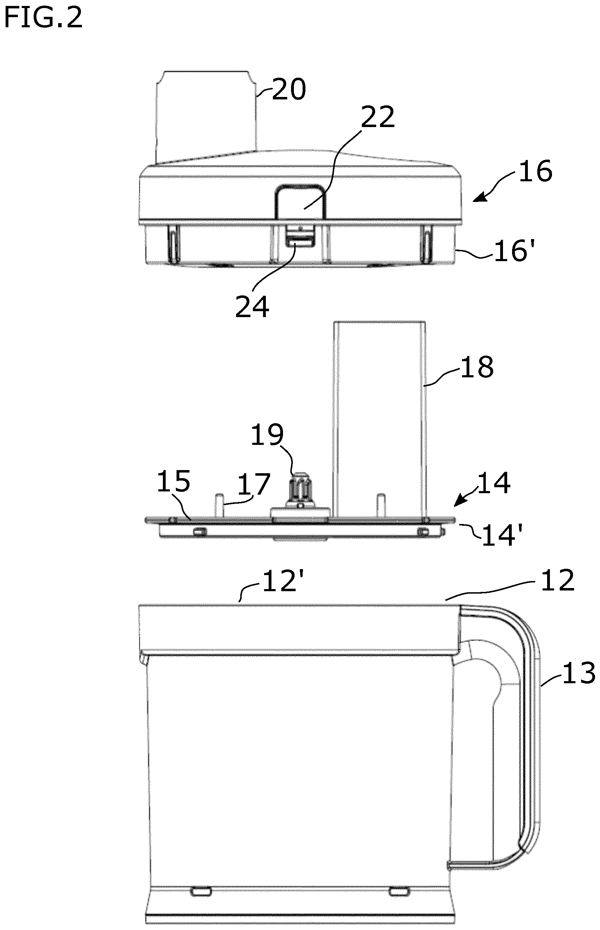

Fig. 2 zeigt das Haushaltsgerät 10 der Fig. 1b) in den einzelnen Komponenten. Der Deckel 16 hat die Form eines im Wesentlichen kreisförmigen Zylinders, von dem sich an dessen Oberseite die Aufnahme 20 zur Aufnahme der Motoreinheit 10` erstreckt. Der Deckel 16 weist ferner einen zurückgesetzten Abschnitt 16' auf, der in die Öffnung 12' der Schüssel 12 eingesetzt werden kann und mit dieser abschließt. Ferner weist der Deckel 16 eine Raste 24 auf, die mit einem entsprechenden Vorsprung (nicht dargestellt) der Schüssel 12 einrasten kann und somit den Deckel 16 bezüglich der Schüssel 12 arretiert. Diese Raste 24 kann mittels eines Knopfes 22 gelöst werden, um das Entfernen des Deckels 16 von der Schüssel 12 zu ermöglichen.

Der Spritzschutz 14 weist eine im Wesentlichen flache Platte 15 auf, die in die Öffnung 12' der Schüssel 12 eingeführt werden kann, sodass oben auf den Spritzschutz 14 der Deckel 16 so eingesetzt werden kann, dass der zurückgesetzte Abschnitt 16' von der Öffnung 12' umfasst wird. Der Spritzschutz 14 weist einen Angrenzungsbereich 14` mit Vorsprüngen auf, wobei dieser Angrenzungsbereich 14' gegen die Innenwand der Öffnung 12' bei Benutzung anliegt und somit ein Herausspritzen von Lebensmitteln, die in der Schüssel 12 verarbeitet werden, verhindert oder erschwert. An derjenigen Seite des Spritzschutzes 14, welche bei Verwendung dem Deckel 16 zugewandt ist, erstreckt sich das Zuführrohr 18. Auf der gleichen Seite sind ferner Stifte 17 (vorliegend vier) vorgesehen, die mit den später beschriebenen Auswurfelementen 32 des Deckels 16 zusammenwirken. Ferner weist der Spritzschutz 14 ein Zwischenkopplungselement 19 auf, welches mit einer entsprechenden Transmissionskupplung 30 in dem Deckel 16 gekoppelt werden kann, sodass auf das Zwischenkopplungselement 19 ein Drehmoment ausgeübt wird.

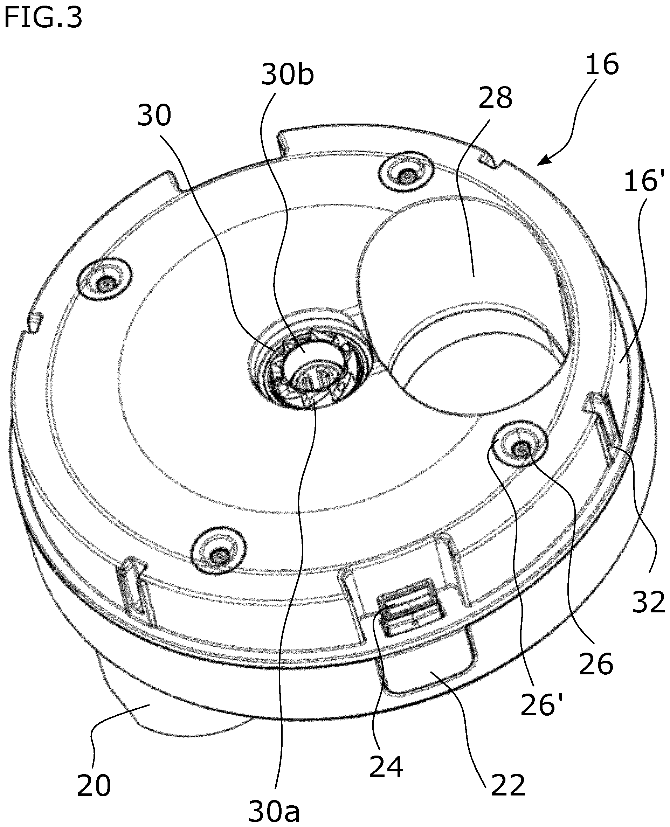

Fig. 3 zeigt eine Untersicht auf den Deckel 16. Dieser Deckel 16 hat einen im Wesentlichen kreisförmigen Querschnitt. In dem zurückgesetzten Teil 16' sind Führungsnuten 32 vorgesehen, durch die der Deckel 16 bezüglich der Öffnung 12` positioniert werden kann und gegen Verdrehen gesichert ist. Durch den Deckel 16 hindurch geht eine Öffnung 28, die dazu ausgestaltet ist, das Zuführrohr 18 mit wenig Spiel hindurchtreten zu lassen. Ferner sind Auswurfelemente 26 (vorliegend vier) in Öffnungen 26` vorgesehen, die durch nicht dargestellte Federn so vorgespannt sind, dass sie eine nach außen gerichtete Kraft auf in die entsprechenden Öffnungen eingeführte Stifte 17 ausüben.

In der Mitte des Deckels 16 befindet sich die Transmissionskupplung 30. Diese Transmissionskupplung 30 dient dazu, ein Drehmoment auf ein in diese Transmissionskupplung 30 eingeführtes Zwischenkopplungselement 19 des Spritzschutzes 14 auszuüben. Im Detail weist diese Transmissionskupplung 30 ein inneres erstes Kopplungselement 30b für hohe Geschwindigkeiten des Werkzeugs und ein äußeres erstes Kopplungselement 30a für geringere Drehgeschwindigkeiten des Werkzeugs auf. Diese beiden ersten Kopplungselemente 30a, 30b sind mit einem Getriebe 62 im Inneren des Deckels 16 gekoppelt, welches eine Drehmomenteingabe von der Motorkupplung 21 übersetzt und dieses an ein Zwischenkopplungselement 19 des Spritzschutzes 14 ausgibt. Hierbei ist das innere erste Kopplungselement 30b so ausgestaltet, dass sie sich mit einer höheren Geschwindigkeit dreht als das äußere erste Kopplungselement 30a, bei jeweils gleicher Drehgeschwindigkeit der Motorkupplung 21.

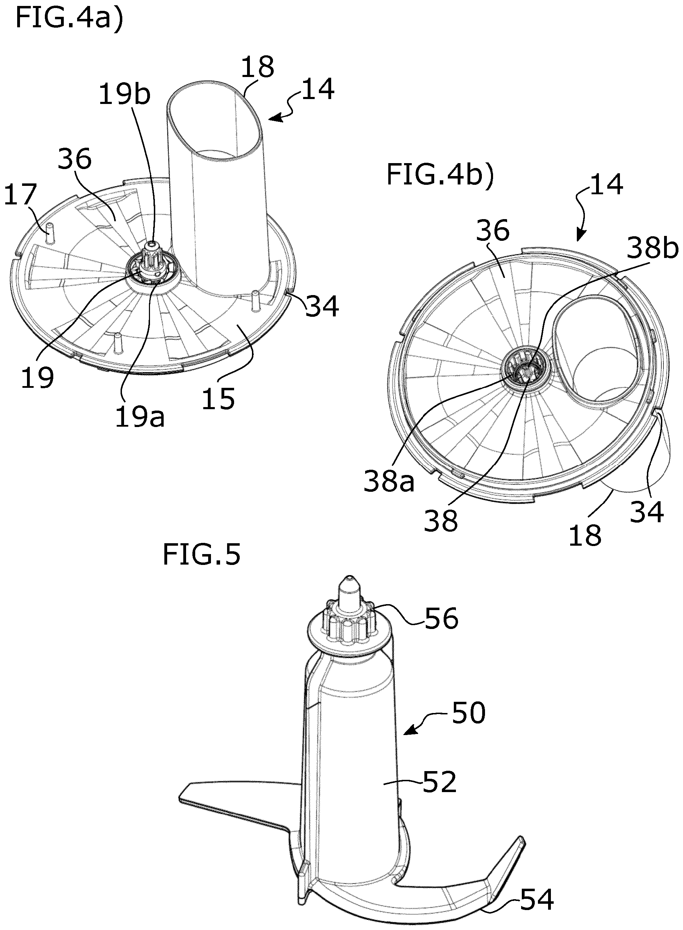

Figuren 4a) und 4b) zeigen eine Draufsicht bzw. eine Untersicht des Spritzschutzes 14. Der Spritzschutz 14 weist eine im Wesentlichen flache Platte 15 auf, die vorliegend Wellen 36 aufweist. Diese Wellen 36 erstrecken sich radial und dienen zur Verstärkung der Platte 15. Ferner sind (vorliegend vier) Stifte 17 ausgebildet. Die Positionen dieser Stifte 17 sind an den Positionen der Auswurfelemente 26 orientiert, sodass die Stifte 17 in die Öffnungen 26' des Deckels eindringen können und dass dann jeweils die Auswurfelemente 26 eine Rückstellkraft auf die Stifte 17 ausüben, die so gerichtet ist, dass sie den Deckel 16 und den Spritzschutz 14 voneinander wegdrückt.

In der Mitte der Platte 15 ist ein Durchbruch vorgesehen, in dem ein Zwischenkopplungselement 19 drehbar gelagert ist. Dieses Zwischenkopplungselement 19 weist ein inneres zweites Kopplungselement 19b und ein äußeres zweites Kopplungselement 19a zum Eingriff mit dem äußeren ersten Kopplungselement 30a bzw. dem inneren ersten Kopplungselement 30b des Deckels 16 auf, sodass das innere erste Kopplungselement 30b ein Drehmoment auf das innere zweite Kopplungselement 19b bzw. das äußere erste Kopplungselement 30a ein Drehmoment auf das äußere zweite Kopplungselement 19a ausüben kann. Hierdurch kann das Zwischenkopplungselement 19 durch die Transmissionskupplung 30 gedreht werden. Das innere zweite Kopplungselement 19b und das äußere zweite Kopplungselement 19a lassen sich voneinander unabhängig drehen.

Auf der Unterseite des Spritzschutzes 14 befindet sich ein Ausgabeabschnitt 38 als Teil des Zwischenkopplungselements 19, die jeweils eine äußere Ausgabekopplung 38a bzw. eine innere Ausgabekopplung 38b aufweist, die jeweils mit der entsprechenden Kopplung 56 des Werkzeugs 50 (siehe Fig. 5) im Eingriff sein kann. Die äußere Ausgabekopplung 38a ist Teil des äußeren zweiten Kopplungselements 19a, und die innere Ausgabekopplung 38b ist Teil des inneren zweiten Kopplungselements 19b. Je nach Werkzeug ist die Kopplung 56 so gestaltet, dass sie entweder mit der inneren oder äußeren Ausgabekopplung 38a/b in Eingriff kommt, wodurch entweder eine hohe bzw. niedrige Drehgeschwindigkeit auf dieses Werkzeug 50 übertragen werden kann. An den jeweiligen Angrenzungsbereichen 14' des Spritzschutzes 14 befinden sich jeweils Ausnehmungen 34, die von ihrer Funktion den Nuten 32 entsprechen und die dazu dienen, den Spritzschutz 14 bezüglich der Schüssel 12 zu positionieren und gegen Verdrehen zu sichern. Die Anzahl dieser Ausnehmungen 34 und der Nuten 32 des Deckels 16 ist nicht beschränkend.

Fig. 5 zeigt ein Beispiel eines Werkzeugs 50, das in dem Haushaltsgerät 10 verwendet werden kann. Das Werkzeug 50 hat einen Schaft 52, an dem (vorliegend zwei) Arme 54 zum Kneten von Lebensmitteln vorgesehen sind. An demjenigen Ende des Schaftes 52, welcher den Armen 54 gegenüberliegt, befindet sich eine Kopplung 56 zum Koppeln mit dem Ausgabeabschnitt 38 des Zwischenkopplungselements 19 (bzw. genauer gesagt mit einem unter der inneren oder äußeren Ausgabekopplung 38a, 38b) .

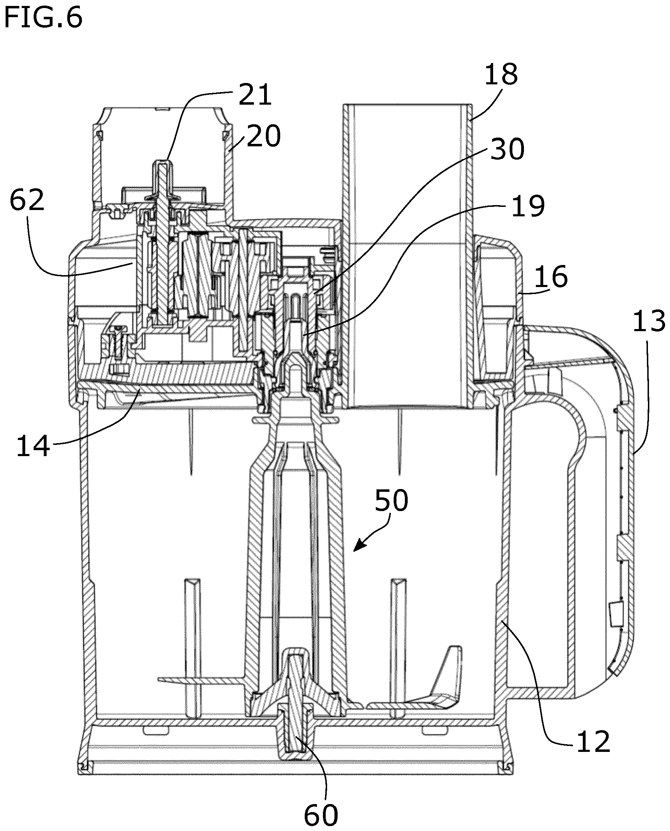

Fig. 6 zeigt eine Schnittansicht durch das Haushaltsgerät 10 der Fig. 1b). Wie zu sehen ist, ist das Werkzeug 50 auf eine Nabe 60, die an der Unterseite der Schüssel 12 vorgesehen ist, drehbar aufgesetzt, sodass sich das Werkzeug 50 um die Achse des Schaftes 52 innerhalb der Schüssel 12 drehen kann. An dem oberen Ende des Schaftes 52 ist die Kopplung 56 im Eingriff mit dem Ausgabeabschnitt 38 des Zwischenkopplungselements 19, welches in dem Spritzschutz 14 drehbar gelagert ist. Dieses Zwischenkopplungselement 19 ist wiederum mit der Transmissionskupplung 30 im Eingriff, die über das Getriebe 62 mit der Motorkupplung 21 verbunden ist. Wenn ein Motor in diesem Zustand ein Drehmoment auf die Motorkupplung 21 ausübt, wird das Drehmoment über das Getriebe 62 zu der Transmissionskupplung 30 übertragen, von dieser auf das Zwischenkopplungselement 19 übertragen und von diesem letztlich zu dem Werkzeug 50 übertragen, sodass sich dieses Werkzeug 50 innerhalb der Schüssel 12 dreht und die innerhalb der Schüssel 12 befindlichen Lebensmittel zerkleinert.

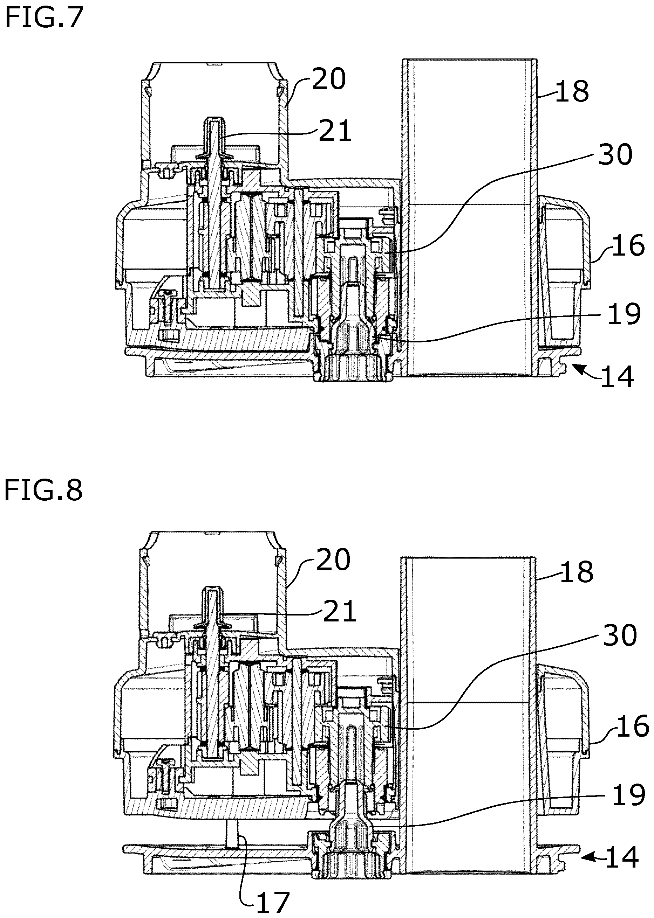

Figuren 7 und 8 zeigen Schnittansichten der zusammengebauten Anordnung aus dem Deckel 16 und dem Spritzschutz 14. Hierbei sind in Fig. 7 Spritzschutz 14 und der Deckel 16 zusammengeschoben, sodass die Auswurfelemente 32 in den Deckel 16 gegen deren Vorspannkraft hineingedrückt sind. In diesem Zustand ist das Zwischenkopplungselement 19 mit der Transmissionskupplung 30 im Eingriff, sodass die Transmissionskupplung 30 ein Drehmoment auf das Zwischenkopplungselement 19 ausüben kann. Dies würde bedeuten, dass ein Drehmoment, welches auf die Motorkupplung 21 ausgeübt wird, zu dem Zwischenkopplungselement 19 übertragen würde und dass somit ein Werkzeug 50, welches mit dem Zwischenkopplungselement 19 gekoppelt ist, sich drehen könnte. Falls in einem solchen Zustand ein Benutzer in das Werkzeug 50 greift, könnte dies zu Verletzungen des Benutzers und auch zu Beschädigungen des Werkzeugs 50 führen.

Um dies zu vermeiden, sind die Auswurfelemente 32 und die Stifte 17 vorgesehen, welche so ausgebildet sind, dass sie den Deckel 16 von dem Spritzschutz 14 wegdrücken, wenn diese nicht auf der Schüssel sitzen, wie dies in Fig. 8 gezeigt ist. In diesem Zustand besteht kein Eingriff zwischen dem Zwischenkopplungselement 19 und der Transmissionskupplung 30, sodass einen Drehmoment, das auf die Motorkupplung 21 ausgeübt wird, nicht dazu führen würde, dass sich das Zwischenkopplungselement 19 dreht, sodass auch dementsprechend ein in diesem Zwischenkopplungselement 19 befindliches Werkzeug 50 sich nicht angetrieben drehen würde. Insofern wäre es in diesem Zustand nicht möglich, dass sich ein Benutzer an einem dermaßen rotierenden Werkzeug 50 verletzt. Da dies jedoch der "Ruhezustand" bzw. Standardzustand des Haushaltsgeräts bzw. der Anordnung aus Deckel 16 und Spritzschutz 14 ist, ist somit der Normalzustand des Haushaltsgeräts sicher.

Lediglich dann, wenn der Deckel 16 und Spritzschutz 14 zusammengedrückt werden, kann ein Drehmoment, welches auf die Motorkupplung 21 ausgeübt wird, zu einer Drehung des Zwischenkopplungselement 19 führen. Hierzu muss jedoch eine Gegenkraft gegen die Rückstellkraft der Auswurfelemente 32 erzeugt werden. Im zusammengebauten Zustand des Haushaltsgeräts 10, wie dieser in Fig. 1b gezeigt wird, wird diese Gegenkraft unter anderem mittels der Raste 24 erzeugt. Dadurch, dass der Deckel 16 auf der Schüssel 12 einrasten kann, wird verhindert, dass der Deckel 16 von dem Spritzschutz 14 weggedrückt wird. Insofern greift in diesem, in Fig. 1b) gezeigten Zustand, das Zwischenkopplungselement 19 in die Transmissionskupplung 30 ein und wird in diesem Zustand über die Raste 24 gehalten. Jedoch wäre es prinzipiell auch möglich, auf diese Raste 24 zu verzichten, jedoch müsse dann anderweitig (zum Beispiel durch ein entsprechend hohes Gewicht des Deckels 16 oder durch eine von dem Benutzer auszuübende Kraft) sichergestellt werden, dass der Deckel 16 hinreichend stark auf den Spritzschutz 14 gedrückt wird.

Insofern führt die Kombination aus dem einen oder den mehreren Stiften 17, dem einen oder mehreren vorgespannten Auswurfelementen 32 und der Raste 24 bzw. der Befestigungseinrichtung zu einem Haushaltsgerät, welches ein hohes Maß an Sicherheit bereitstellt, während es gleichzeitig benutzerfreundlich ist.

## Patentansprüche

1. Haushaltsgerät (10) zum Verarbeiten von Lebensmitteln, mit:
- einer Schüssel (12), die eine Öffnung (12') zum Einführen von Lebensmitteln in die Schüssel (12) aufweist und in die ein Werkzeug (50) zum Verarbeiten von Lebensmitteln einsetzbar ist,
- einem Spritzschutz (14), der in die Öffnung (12') der Schüssel einsetzbar ist, so dass Angrenzungsbereiche (14') des Spritzschutzes (14) der Innenwand der Öffnung (12') gegenüberliegen, um das Herausspritzen von Lebensmitteln aus der Schüssel (12) zu verhindern,
- einem vom Spritzschutz (14) separaten Deckel (16), der in die Öffnung (12') der Schüssel (12) einsetzbar ist,
wobei der Spritzschutz (14) eine Platte (15) aufweist, die sich im Wesentlichen flach zu den Angrenzungsbereichen (14') erstreckt, so dass der Deckel (16) auf dem Spritzschutz (14) aufsitzt, ohne in den Spritzschutz (14) einzudringen.

2. Haushaltsgerät (10) nach Anspruch 1, wobei der Spritzschutz (14) ein Zuführrohr (18) für Lebensmittel aufweist, durch welches Lebensmittel in die Schüssel (12) eingeführt werden können.

3. Haushaltsgerät (10) nach Anspruch 1 oder 2, wobei der Deckel (16) eine Motorkupplung (21), mit der eine externe Motoreinheit (10') koppelbar ist, und eine Transmissionskupplung (30) aufweist, die mit der Motorkupplung (21) gekoppelt ist, bevorzugt über ein Getriebe (62), und die dazu ausgestaltet ist, ein Drehmoment, das durch die externe Motoreinheit (10') erzeugt wird und auf die Motorkupplung (21) ausgeübt wird, auszugeben.

4. Haushaltsgerät (10) nach Anspruch 3, wobei der Spritzschutz (14) ein Zwischenkopplungselement (19) aufweist, das mit der Transmissionskupplung (70) und dem Werkzeug (50) koppelbar ist, so dass ein Drehmoment, das durch die Transmissionskupplung (30) ausgegeben wird, zu dem Werkzeug (50) übertragen wird.

5. Haushaltsgerät (10) nach Anspruch 4, wobei das Zwischenkopplungselement (19) koaxial angeordnete innere (19b) und äußere zweite Kopplungselemente (19a) aufweist, die dazu ausgestaltet sind, gleichzeitig mit unterschiedlichen Drehgeschwindigkeiten angetrieben zu werden.

6. Haushaltsgerät (10) nach Anspruch 4 oder 5, wobei das innere (19b) und/oder äußere (19a) zweite Kopplungselement einteilig ist.

7. Haushaltsgerät (10) nach Anspruch 4, 5 oder 6, wobei das innere und äußere zweite Kopplungselement (19a, 19b) an denjenigen Seiten, die dem Deckel (16) gegenüberliegen und/oder die bei Gebrauch den zu verarbeitenden Lebensmitteln gegenüberliegen, unterschiedliche Geometrien zur Drehmomentübertragung aufweisen.

8. Haushaltsgerät (10) nach einem der vorhergehenden Ansprüche, ferner mit einer Einrichtung, die zwischen dem Deckel (16) und dem Spritzschutz (14) eine Vorspannkraft erzeugt, welche so gerichtet ist, dass sie den Deckel (16) und den Spritzschutz (14) voneinander wegdrückt, wobei bevorzugt im ausgerückten Zustand Transmissionskupplung (70) und Zwischenkopplungselement (19) nicht im Eingriff sind und somit ein Antreiben des Werkzeugs (50) nicht möglich ist.

9. Haushaltsgerät (10) nach Anspruch 8, wobei die Einrichtung einen oder mehrere Stifte (17), die an dem Spritzschutz (14) vorgesehen sind, und ein oder mehrere vorgespannte Auswurfelemente (32) aufweist, die in dem Deckel (16) vorgesehen sind und eine Druckkraft auf den oder die Stifte (17) ausüben.

10. Haushaltsgerät (10) nach einem der vorhergehenden Ansprüche, ferner mit einer Befestigungseinrichtung zum lösbaren Befestigen des Deckels (16) an der Schüssel (12), wobei die Befestigungseinrichtung vorzugsweise eine Rasteinrichtung (24) im Deckel (16) ist, die dazu ausgestaltet ist, an der Schüssel (12) einzurasten.

11. Haushaltsgerät (10) nach einem der vorhergehenden Ansprüche, wobei die Schüssel (12) ferner an einem Ende, das der Öffnung (12') gegenüberliegt, eine Nabe (60) aufweist, die dazu ausgestaltet ist, das Werkzeug (50) drehbar zu lagern.

12. Haushaltsgerät (10) nach einem der vorhergehenden Ansprüche, wobei die Platte (15) des Spritzschutzes (14) ein gewelltes Profil aufweist.

13. Haushaltsgerät (10) nach einem der vorhergehenden Ansprüche, wobei die Platte (15) des Spritzschutzes (14) Verstärkungsrippen aufweist.

14. Haushaltsgerät (10) nach einem der vorhergehenden Ansprüche, wobei der Spritzschutz (14) eine Bajonettkopplung aufweist, um mit einem Werkzeug (50) gekoppelt zu werden.

15. Haushaltsgerät (10) nach einem der vorhergehenden Ansprüche, ferner mit einem Werkzeug (50) zum Verarbeiten von Lebensmitteln.

## Claims

1. Domestic appliance (10) for processing foods, comprising:
- a bowl (12) which comprises an opening (12') for introducing foods into the bowl (12) and into which a tool (50) for processing foods can be inserted,
- a splash guard (14) that can be inserted into the opening (12') of the bowl, such that adjoining regions (14') of the splash guard (14) are opposite the inner wall of the opening (12') so as to prevent foods from splashing out of the bowl (12),
- a lid (16) that is separate from the splash guard (14) and that can be inserted into the opening (12') of the bowl (12),
wherein the splash guard (14) comprises a plate (15) that extends in a substantially planar manner to the adjoining regions (14'), such that the lid (16) rests on the splash guard (14) without encroaching into the splash guard (14).

2. Domestic appliance (10) according to claim 1, wherein the splash guard (14) comprises a feed tube (18) for foods through which foods can be introduced into the bowl (12).

3. Domestic appliance (10) according to claim 1 or 2, wherein the lid (16) comprises a motor coupling (21) to which an external motor unit (10') can be coupled, and a transmission coupling (30) that is coupled to the motor coupling (21), preferably via a transmission (62), and that is designed to output a torque that is generated by the external motor unit (10') and that is exerted on the motor coupling (21).

4. Domestic appliance (10) according to claim 3, wherein the splash guard (14) comprises an intermediate coupling element (19) that can be coupled to the transmission coupling (70) and the tool (50), such that a torque that is output by the transmission coupling (30) is transmitted to the tool (50).

5. Domestic appliance (10) according to claim 4, wherein the intermediate coupling element (19) comprises coaxially arranged inner (19b) and outer second coupling elements (19a) that are designed to be driven at different rotational speeds at the same time.

6. Domestic appliance (10) according to claim 4 or 5, wherein the inner (19b) and/or outer (19a) second coupling element is a single piece.

7. Domestic appliance (10) according to claim 4, 5 or 6, wherein the inner and outer second coupling element (19a, 19b) have different shapes for torque transmission on the sides that are opposite the lid (16) and/or opposite the foods to be processed during use.

8. Domestic appliance (10) according to any of the preceding claims, further comprising a device that generates a preload force between the lid (16) and the splash guard (14), which preload force is directed such that it pushes the lid (16) and splash guard (14) away from one another, wherein, preferably in the disengaged state, the transmission coupling (70) and intermediate coupling element (19) are not engaged and thus it is not possible to drive the tool (50).

9. Domestic appliance (10) according to claim 8, wherein the device comprises one or more pins (17) that are provided on the splash guard (14) as well as one or more preloaded ejector elements (32) that are provided in the lid (16) and that exert a compressive force on the pin or pins (17).

10. Domestic appliance (10) according to any of the preceding claims, further comprising a fastening device for releasably fastening the lid (16) to the bowl (12), wherein the fastening device is preferably a latching device (24) in the lid (16) that is designed to latch onto the bowl (12) .

11. Domestic appliance (10) according to any of the preceding claims, wherein the bowl (12) further comprises, on an end that is opposite the opening (12'), a hub (60) that is designed to rotatably support the tool (50).

12. Domestic appliance (10) according to any of the preceding claims, wherein the plate (15) of the splash guard (14) has a corrugated profile.

13. Domestic appliance (10) according to any of the preceding claims, wherein the plate (15) of the splash guard (14) comprises reinforcing ribs.

14. Domestic appliance (10) according to any of the preceding claims, wherein the splash guard (14) comprises a bayonet coupling for coupling to a tool (50).

15. Domestic appliance (10) according to any of the preceding claims, further comprising a tool (50) for processing foods.

## Revendications

1. Appareil électroménager (10) pour la transformation de denrées alimentaires, comprenant :
- un bol (12), qui présente une ouverture (12') pour introduire des denrées alimentaires dans le bol (12) et dans lequel un outil (50) peut être inséré pour la transformation des denrées alimentaires,
- un dispositif anti-projections (14), qui peut être inséré dans l'ouverture (12') du bol, de sorte que les zones adjacentes (14') du dispositif anti-projections (14) sont opposées à la paroi interne de l'ouverture (12'), afin d'empêcher que des denrées alimentaires ne jaillissent hors du bol (12),
- un couvercle (16) séparé du dispositif anti-projections (14), qui peut être inséré dans l'ouverture (12') du bol (12),
dans lequel le dispositif anti-projections (14) présente un plateau (15), qui s'étend sensiblement à plat par rapport aux zones adjacentes (14'), de sorte que le couvercle (16) repose sur le dispositif anti-projections (14), sans pénétrer dans le dispositif anti-projections (14).

2. Appareil électroménager (10) selon la revendication 1, dans lequel le dispositif anti-projections (14) présente un tuyau d'alimentation (18) pour les denrées alimentaires, par lequel les denrées alimentaires peuvent être introduites dans le bol (12).

3. Appareil électroménager (10) selon la revendication 1 ou 2, dans lequel le couvercle (16) présente un couplage de moteur (21), avec lequel une unité de moteur externe (10') peut être couplée, et un couplage de transmission (30), qui est couplé avec le couplage de moteur (21), de préférence par l'intermédiaire d'une transmission (62) et qui est agencé pour produire un couple, qui est généré par l'unité de moteur externe (10') et est appliqué au couplage de moteur (21).

4. Appareil électroménager (10) selon la revendication 3, dans lequel le dispositif anti-projections (14) présente un élément de couplage intermédiaire (19), qui peut être couplé au couplage de transmission (70) et à l'outil (50), de sorte qu'un couple, qui est produit par le couplage de transmission (30), est transféré à l'outil (50).

5. Appareil électroménager (10) selon la revendication 4, dans lequel l'élément de couplage intermédiaire (19) présente des seconds éléments de couplage interne (19b) et externe (19a) disposés de manière coaxiale, qui sont agencés pour être entraînés simultanément à différentes vitesses de rotation.

6. Appareil électroménager (10) selon la revendication 4 ou 5, dans lequel le second élément de couplage interne (19b) et/ou externe (19a) est fabriqué en une seule pièce.

7. Appareil électroménager (10) selon la revendication 4, 5 ou 6, dans lequel les seconds éléments de couplage interne et externe (19a, 19b) présentent aux côtés opposés au couvercle (16) et/ou qui lors de l'utilisation sont opposés aux denrées alimentaires à transformer, différentes géométries pour le transfert du couple.

8. Appareil électroménager (10) selon l'une quelconque des revendications précédentes, comprenant en outre un appareil, qui génère entre le couvercle (16) et le dispositif anti-projections (14) une force de précontrainte, laquelle est orientée de telle manière qu'elle repousse le couvercle (16) et le dispositif anti-projections (14) l'un de l'autre, dans lequel de préférence à l'état dégagé le couplage de transmission (70) et l'élément de couplage intermédiaire (19) n'entrent pas en prise et par conséquent un entraînement de l'outil (50) est impossible.

9. Appareil électroménager (10) selon la revendication 8, dans lequel l'appareil présente une ou plusieurs tiges (17), qui sont prévues sur le dispositif anti-projections (14), et un ou plusieurs éléments d'éjection (32) précontraints, qui sont prévus dans le couvercle (16) et qui appliquent une force de compression sur le ou les tiges (17).

10. Appareil électroménager (10) selon l'une quelconque des revendications précédentes, comprenant en outre un appareil de fixation pour fixer de manière amovible le couvercle (16) au bol (12), dans lequel l'appareil de fixation est de préférence un appareil d'encliquetage (24) dans le couvercle (16), qui est agencé pour s'encliqueter au bol (12).

11. Appareil électroménager (10) selon l'une quelconque des revendications précédentes, dans lequel le bol (12) présente plus loin à une extrémité, qui est opposée à l'ouverture (12'), un moyeu (60), qui est agencé pour entreposer l'outil (50) de manière rotative.

12. Appareil électroménager (10) selon l'une quelconque des revendications précédentes, dans lequel le plateau (15) du dispositif anti-projections (14) présente un profil ondulé.

13. Appareil électroménager (10) selon l'une quelconque des revendications précédentes, dans lequel le plateau (15) du dispositif anti-projections (14) présente des nervures de renforcement.

14. Appareil électroménager (10) selon l'une quelconque des revendications précédentes, dans lequel le dispositif anti-projections (14) présente un couplage à baïonnette, pour être couplé à un outil (50).

15. Appareil électroménager (10) selon l'une quelconque des revendications précédentes, comprenant en outre un outil (50) pour la transformation de denrées alimentaires.
